# EUROPEAN PATENT APPLICATION

(11) **EP 2 006 661 A2**
(43) Date of publication of application: **24.12.2008**
(21) Application number: 08157518.5
(22) Date of filing: 03.06.2008
(51) Int. Cl.: G01N 11/16, F01M 11/10

(54) **Viscosity Sensor**

(30) Priority: 19.06.2007 US 820276
(71) Applicant: Delphi Technologies, Inc., Troy, Michigan 48007 (US)
(72) Inventor: Carmona, Jesus, Columbus, IN 47203 (US); Lin, Yingjie, El Paso, TX 79912 (US)
(74) Representative: Denton, Michael John

(57) **Abstract**

A viscosity sensor for, e.g., outputting a signal representing the viscosity of engine oil has one or more piezoelectric diaphragms disposed in a fluid chamber (28) of a housing (20). An elongated amplification channel (30) is formed in the housing (20) and extends away from the chamber (28). The diaphragm can be excited to induce fluid movement that in turn induces the diaphragm to output a sensor signal representative of the viscosity of the fluid.

## Description

### TECHNICAL FIELD

The present invention relates generally to viscosity sensors.

### BACKGROUND OF THE INVENTION

The viscosity of certain fluids such as engine lubricating oil is an important parameter. Vehicle engines, for instance, are typically designed with an oil viscosity range in mind, and if the oil is too viscous or not viscous enough, engine damage can result. Accordingly, it is an object of the invention to provide a simple, elegant, inexpensive viscosity sensor that may be employed in, e.g., vehicle engines.

### SUMMARY OF THE INVENTION

A viscosity sensor has one or more piezoelectric elements and a housing holding the piezoelectric element in a fluid chamber. An elongated amplification channel is formed in the housing and extends away from the chamber. The piezoelectric element can be excited to induce fluid movement that in turn induces the piezoelectric element to output a sensor signal representative of the viscosity of the fluid.

In one embodiment, two piezoelectric elements are provided in the housing and are closely spaced apart coaxially with each other with the channel being intermediate the piezoelectric elements in the transverse vertical plane of the sensor. The chamber may be a disk-shaped chamber that is between the piezoelectric elements and that communicates with the channel. The chamber holds the fluid. A computer such as a vehicle ECM may be provided for receiving the sensor signal.

In another aspect, a method for measuring the viscosity of a fluid includes disposing one or more piezoelectric elements in the fluid and applying an excitation signal to the piezoelectric element. An induced signal is sensed from the piezoelectric element and correlated to a viscosity. If desired, the induced signal can be processed with an exponential function characterized by exponential coefficients establishing a sensor output index.

In yet another aspect, a sensor system for outputting an induced signal representing the viscosity of a fluid inducing the signal includes piezoelectric means for creating motion in the fluid and, in response to the motion, generating the induced signal. Means are provided for correlating the induced signal to the viscosity.

The details of the present invention, both as to its structure and operation, can best be understood in reference to the accompanying drawings, in which like reference numerals refer to like parts, and in which:

### BRIEF DESCRIPTION OF THE DRAWINGS

Figure 1 is a block diagram showing the present sensor in one intended environment;

Figure 2 is a perspective view of a non-limiting embodiment of the sensor, with the housing shown transparently to reveal components inside;

Figure 3 is an exploded translucent view of a specific implementation of the sensor;

Figure 4 is a side view of an alternate sensor;

Figure 5 is a graph of the signal output by the sensor shown in Figure 3; and

Figure 6 is a chart showing sensor output index as a function of viscosity.

### DESCRIPTION OF THE PREFERRED EMBODIMENT

The present invention is intended for application in automotive vehicle systems and will be described in that context. It is to be understood, however, that the present invention could also be successfully applied in many other applications including non-vehicle applications.

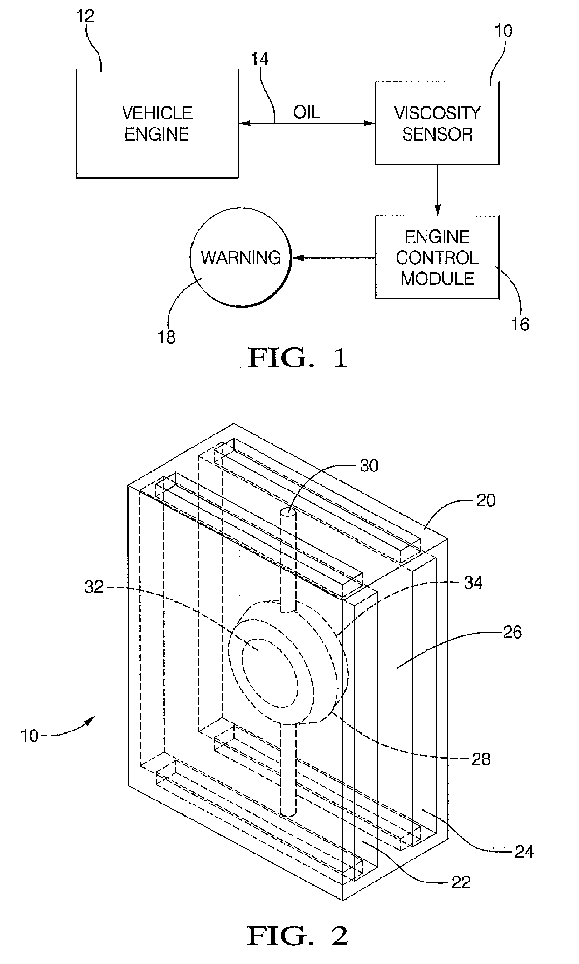

Referring initially to Figure 1, a viscosity sensor 10 is shown which receives a fluid such as oil from a source such as a vehicle engine 12 through a fluid passage 14 for outputting a signal representative of the viscosity of the fluid in accordance with principles set forth further below. In the vehicle application, the sensor 10 may output an electrical signal to a computer such as an engine control module 16 that can process the signal and, if the signal indicates that the oil viscosity is not in a predetermined viscosity range, actuate a warning element 18 such as a lamp and/or an audio or visual message indicating a viscosity fault. The sensor 10 when used in the vehicle application may be mounted in any convenient location of the vehicle, e.g., in the oil pan.

Figure 2 shows a preferred non-limiting embodiment of the sensor 10. As shown, the sensor 10 can include a preferably lightweight, hollow, parallelepiped-shaped metal or plastic housing 20 which can include opposed sensor covers 22, 24 that sandwich a central sensor support plate 26 that is centrally formed with a disk-shaped chamber 28. As shown, an elongated narrow channel 30 extends above and below the chamber 28 in communication therewith.

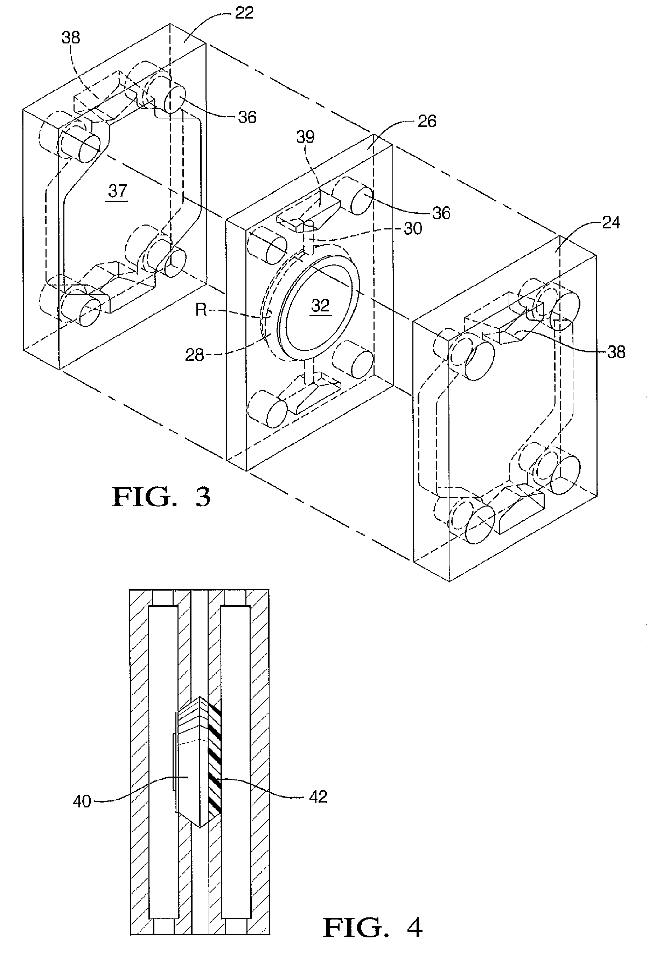

The chamber 28 thus may be defined by a central through-hole in the central sensor plate 26 and may be further defined by disk-shaped depressions in the covers 22, 24, shown and described further below in reference to Figure 3. At least one and, in the non-limiting embodiment shown in Figure 2, two piezoelectric elements, referred to in the specific non-limiting embodiment shown as "diaphragms" 32, 34, may be closely spaced apart coaxially with each other with the chamber 28 between them and, hence, with the channel 30, which extends into the chamber 28 from above and below the chamber, being intermediate the diaphragms 32, 34 in the transverse vertical plane. In the embodiment shown the piezoelectric diaphragms 32, 34 are disk-shaped and around their peripheries they substantially fill the periphery of the chamber 28.

The piezoelectric diaphragms 32, 34 may be made of any suitable material that exhibits the piezoelectric effect of mechanically deforming when an excitation signal (from, e.g., the ECM 16 shown in Figure 1) is applied to it and that generates a sensor signal (to, e.g., the ECM 16) when it is mechanically deformed.

The overall operation of the sensor 10 may now be understood. The diaphragms 32, 34 may be excited simultaneously with, e.g., one period of a sinusoidal excitation current. The excitation current preferably may be under one kiloHertz and more preferably may be around three hundred (300) Hertz. As understood herein, a low frequency excitation wave is preferred because otherwise the fluid wave generated by the diaphragms could dissipate before reaching the channel 30. Furthermore, higher frequencies can render the system unduly sensitive to small bubbles that may form in the fluid.

Owing to the excitation signal, the diaphragms commence a damped free vibration, deforming to induce waves in the fluid in the chamber 28. The channel 30 serves to amplify the effect in the fluid. In turn, the oscillations in the fluid cause mechanical deformations in the diaphragms 32, 34 which cause the diaphragms to generate electrical sensor signals. The sensor signals may be picked off one or both of the diaphragms and then correlated to viscosity as explained further below.

Figure 3 illustrates details of a non-limiting implementation of the sensor. Each of the covers 22, 24 and plate 26 may be formed with four connector holes 36 that are registered with corresponding holes in the other housing elements as shown for receiving respective connectors (not shown) to hold the housing elements together. Each cover 22, 24 may be formed with a respective central depression 37 for bounding the chamber 28 of the central sensor support plate 26, with each depression 37 not extending through the outer wall of the respective cover 22, 24. Each depression 37, i.e., the interior of each cover 22, 24, may communicate with generally triangular upper and lower oil inlet openings 38 that register with a complementarily-shaped upper and lower inlet openings 39 of the central sensor support plate 26. The channel 30 communicates with the inlet openings 39 of the support plate 26 so that oil can fill the chamber 28.

As shown in the non-limiting embodiment of Figure 3, the openings 38, 39 do not extend to the top surfaces of their respective housing elements so that the channel 30 is isolated from vibrations or external pressures. Similarly, because the depressions 37 do not extend through the outer wall of their respective cover 22, 24, the diaphragms 32, 34 are isolated from outside vibrations or pressures that otherwise might corrupt the signal.

Rims "R" may extend slightly radially inwardly from the periphery of the chamber 28, circumscribing the chamber 28 of the central plate 26 to provide seating surfaces for the edges of the diaphragms 32, 34, respectively. The diaphragms 32, 34 preferably are tightly bonded to the rims "R" to ensure fluid tightness.

Figure 4 shows an embodiment that in all essential respects identical to that shown in Figure 2, except that only a single piezoelectric diaphragm 40 is provided facing a stationary solid seal or plug 42, with the fluid waves beings generated between the diaphragm 40 and seal or plug 42 when the diaphragm 40 is excited.

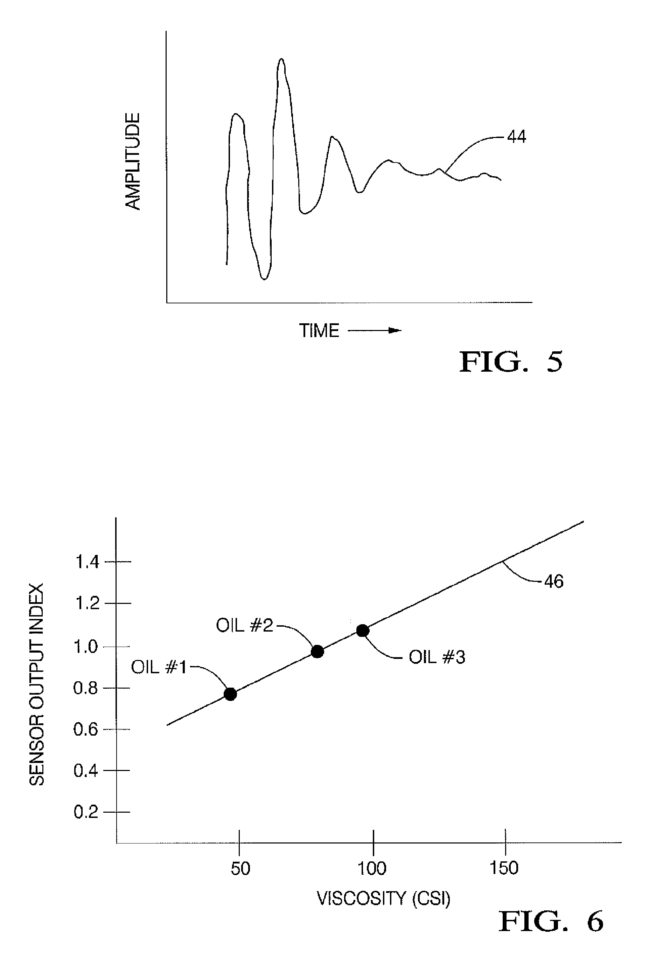

Figures 5 and 6 show additional details of the signal processing of the non-limiting implementation of the invention. The waveform 44 shown in Figure 5 represents the induced output of the sensor in response to the deformation of the diaphragms 32, 34 from the fluid waves. As shown, over time the amplitude of the induced sensor signal dissipates.

The sensor signal may be digitized and filtered to remove high frequency noise. The digitized filtered signal may then be processed with an exponential function to fit the straight line 46 shown in Figure 6, with the exponential coefficients establishing the sensor output index shown on the y-axis in Figure 6.

In undertaking the above process, the peak points of the piezoelectric output signal can be fit to a curve from which an exponential function is obtained that contains the peak points. The coefficient of the exponent obtained from this function corresponds to the damping ratio factor, which is referred to herein as the sensor output index.

In Figure 6, the sensor output index is compared with viscosity data that can be obtained using an appropriate viscometer. As shown, the index is a linear function of the viscosity in the preferred case of motor oils. Therefore, the viscosity number (in, e.g., centiStokes) can be derived from the sensor output index.

Thus, to calibrate the sensor, fluids of known viscosities and temperatures may be processed in the sensor 10 to establish correlations between the exponential coefficients that establish the sensor output index and the viscosity scale of the x-axis in Figure 6. Subsequently, a fluid of unknown viscosity may be processed and the sensor output index correlated to the associated viscosity from the x-axis of Figure 6. When the fluid is engine oil, its temperature can be obtained in accordance with engine oil temperature sensing principles known in the art, and the viscosity range for that temperature can be looked up by, e.g., the ECM 16 and compared with the sensed viscosity to determine whether to generate an alarm for an out-of-range viscosity.

While the particular VISCOSITY SENSOR is herein shown and described in detail, it is to be understood that the subject matter which is encompassed by the present invention is limited only by the claims. For example, in addition to the above connection mechanisms, other quick connect/quick disconnect type of mechanisms may be used.

## Claims

1. A viscosity sensor, comprising:
at least one piezoelectric element (32, 34);
a housing (20) holding the piezoelectric element (32, 34) in a fluid chamber (28); and
at least one elongated amplification channel (30) formed in the housing (20) and extending away from the chamber (28) in communication therewith,
wherein the piezoelectric element (32, 34) can be excited to induce fluid movement that in turn induces the piezoelectric element (32, 34) to output a sensor signal representative of the viscosity of the fluid.

2. The sensor of Claim 1, comprising two piezoelectric elements (32, 34).

3. The sensor of Claim 2, wherein the piezoelectric elements (32, 34) are closely spaced apart coaxially with each other with the channel (30) being intermediate the piezoelectric elements (32, 34) in the transverse vertical plane of the sensor.

4. The sensor of Claim 3, the chamber (28) being a disk-shaped chamber (28) between the piezoelectric elements (32, 34) and communicating with the channel (30), the chamber (28) holding the fluid.

5. The sensor of Claim 1, comprising a computer (16) receiving the sensor signal.

6. The sensor of Claim 5, wherein the computer (16) is an engine control module of a vehicle.

7. The sensor of Claim 1, comprising one and only one piezoelectric element (40) in the sensor.

8. A method for measuring the viscosity of a fluid, comprising:
disposing at least one piezoelectric element (32, 34) in the fluid;
applying an excitation signal to the piezoelectric element (32, 34);
sensing an induced signal from the piezoelectric element (32, 34); and
correlating the induced signal to a viscosity.

9. The method of Claim 8, wherein the excitation signal is a sinusoidal signal with a frequency of less than one kiloHertz.

10. The method of Claim 9, wherein the frequency of the excitation signal is about three hundred (300) Hertz.

11. The method of Claim 8, wherein owing to the excitation signal the piezoelectric element (32, 34) commences a damped free vibration, deforming to induce waves in the fluid.

12. The method of Claim 11, comprising using an elongated channel (30) to amplify the waves.

13. The method of Claim 8, comprising filtering high frequency noise from the induced signal.

14. The method of Claim 8, comprising processing the induced signal with an exponential function **characterized by** exponential coefficients establishing a sensor output index.

15. A sensor system for outputting an induced signal representing the viscosity of a fluid inducing the signal, the sensor comprising:
piezoelectric means (32, 34) for creating motion in the fluid and, in response to the motion, generating the induced signal; and
means (16) for correlating the induced signal to the viscosity.

16. The sensor system of Claim 15, wherein the piezoelectric means is at least one piezoelectric element (32, 34).

17. The sensor system of Claim 15, wherein the piezoelectric means is at least two piezoelectric elements (32, 34).

18. The sensor system of Claim 15, wherein the means for correlating is at least one computer (16).

19. The sensor system of Claim 18, wherein the means for correlating is at least one engine control module (16).

20. The sensor system of Claim 15, comprising a housing (20) holding the piezoelectric means in a fluid chamber (28) and at least one elongated amplification channel (30) formed in the housing (20) and extending away from the chamber (28) in communication therewith, wherein the piezoelectric means can be excited to induce fluid movement that in turn induces the piezoelectric means to output the induced signal.
